(19) Europäisches Patentamt

European Patent Office

Office européen des brevets

(11) **EP 1 388 559 B1**

(12) **EUROPEAN PATENT SPECIFICATION**

(45) Date of publication and mention
of the grant of the patent:
**19.04.2006 Bulletin 2006/16**

(51) Int Cl.:
**C08J 5/18** (2006.01)          **B32B 27/32** (2006.01)
**C08L 23/14** (2006.01)

(21) Application number: **03017627.5**

(22) Date of filing: **11.08.2003**

(54) **Heat-shrinkable polyolefin film**

Durch Wärme schrumpfbare Polyolefin-Folie

Film thermo-rétractable à base de polyoléfine

(84) Designated Contracting States:
**AT BE BG CH CY CZ DE DK EE ES FI FR GB GR
HU IE IT LI LU MC NL PT RO SE SI SK TR**

(30) Priority: **09.08.2002 JP 2002233693
09.10.2002 JP 2002296541**

(43) Date of publication of application:
**11.02.2004 Bulletin 2004/07**

(73) Proprietor: **Toyo Boseki Kabushiki Kaisha
Osaka-shi,
Osaka 530-8230 (JP)**

(72) Inventors:
• **Hashioka, Tohru,
Toyo Boseki K.K.Inuyama Works
Inuyama,
Aichi 484-8508 (JP)**
• **Takabayashi, Seizou,
Toyo Boseki K.K.Inuyama Works
Inuyama,
Aichi 484-8508 (JP)**
• **Tabota, Norimi,
Toyo Boseki K.K.Inuyama Works
Inuyama,
Aichi 484-8508 (JP)**
• **Oda, Naonobu,
Toyo Boseki K.K.Inuyama Works
Inuyama,
Aichi 484-8508 (JP)**
• **Nagano, Hiroshi,
Toyo Boseki K.K.Inuyama Works
Inuyama,
Aichi 484-8508 (JP)**

(74) Representative: **Vossius & Partner
Siebertstrasse 4
81675 München (DE)**

(56) References cited:
**EP-A- 0 391 740**

• **PATENT ABSTRACTS OF JAPAN vol. 2000, no.
09, 13 October 2000 (2000-10-13) & JP 2000
159946 A (GRAND POLYMER:KK), 13 June 2000
(2000-06-13)**
• **DATABASE WPI Section Ch, Week 200281
Derwent Publications Ltd., London, GB; Class
A17, AN 2002-744229 XP002264714 & JP 2002
212359 A (JAPAN POLYCHEM CORP), 31 July
2002 (2002-07-31)**
• **PATENT ABSTRACTS OF JAPAN vol. 012, no. 358
(C-531), 26 September 1988 (1988-09-26) & JP 63
113059 A (SUMITOMO CHEM CO LTD), 18 May
1988 (1988-05-18)**
• **PATENT ABSTRACTS OF JAPAN vol. 2002, no.
02, 2 April 2002 (2002-04-02) & JP 2001 301102 A
(MITSUBISHI PLASTICS IND LTD), 30 October
2001 (2001-10-30)**
• **PATENT ABSTRACTS OF JAPAN vol. 013, no. 583
(P-981), 22 December 1989 (1989-12-22) & JP 01
245350 A (NEC CORP), 29 September 1989
(1989-09-29)**

**Description**

Recently, shrinkable labels are widely used for wrapping articles to improve their appearance, to prevent direct impact on the articles wrapped, and to provide label-wrapping for indicating contents inside and also protecting glass bottles or plastic bottles. As plastic materials used for such purposes, polyvinyl chloride, polystyrene, polyethylene terephthalate (PET), polypropylene, etc. are known.

However, labels made of polyvinyl chloride may cause environmental problems such as the generation of chlorine gas on burning, although the film of polyvinyl chloride has good shrinking properties. Labels made of polystyrene or PET are difficult to be separated from PET bottles by flotation, since the difference of specific gravity is small between the labels and the PET bottles. Thus, the recycling of the PET bottles may be interfered. Furthermore, the conventional shrinkable labels comprise resins having low heat resistance to impart sufficient heat-shrinkability to the labels. Therefore, printing inks comprising molten resins may flow over the surface of the labels in the case of retort disinfection.

Polypropylene has a large difference of specific gravity from the PET bottles so that it is easily separated from PET by flotation and also has good heat resistance. However, the film of polypropylene has insufficient low-temperature shrinking properties.

To improve the low-temperature shrinking properties of polypropylene, JP-A-2001-301101 discloses the addition of a propylene-butene-1 copolymer, a petroleum resin or a terpene resin to polypropylene. However, such a resin composition has low stiffness so that the film of the resin composition has larger spontaneous shrinkage than conventional polypropylene. Such large spontaneous shrinkage may case troubles such as the increase of winding constriction over time, etc.

To increase the stiffness of polypropylene, JP-A-2000-159946 discloses the use of a cycloolefin (cycloalkene) resin. That is, an amorphous resin having a glass transition temperature in a practical processing temperature range (50 to 90°C) such as a cyclic polyolefin is added to polypropylene. This is a useful method, since not only shrinkage over time is prevented by the increase of stiffness, but also the low-temperature shrinking property is imparted to polypropylene. However, the prevention of the shrinkage over time is still insufficient, and the further improvement of polypropylene in this regard is highly desired.

In addition, JP-A-2000-246797 discloses a multilayer film comprising a polypropylene layer and a pair of cycloolefin resin layers laminated on both sides of the polypropylene layer. This JP-A publication teaches the use of a mixed solvent such as a mixture of tetrahydrofuran (THF) and isopropanol as an organic solvent to be used for center sealing. The adhesion strength between resin layers adhered using only tetrahydrofuran, which is commonly used in solvent sealing, is low. Thus, it is desired to further improve the adhesion strength between the resin layers adhered with a solvent such as tetrahydrofuran.

One object of the present invention is to provide a commercially advantageous heat-shrinkable polyolefin film having an improved percentage of thermal shrinkage and an improved percentage of thermal shrinkage at low temperature while having substantially the same degree of spontaneous shrinkage as that of conventional polypropylene films.

Another object of the present invention is to provide a heat-shrinkable polyolefin film which can have a practically acceptable adhesion strength when it is sealed with a solvent using only tetrahydrofuran as an organic solvent.

These objects are achieved by a specific heat-shrinkable polypropylene-base film which may be used as a base layer of a laminated film. The film has an improved percentage of thermal shrinkage and an improved percentage of thermal shrinkage at low temperature while it has substantially the same degree of spontaneous shrinkage as that of conventional polypropylene films, and the film is a heat-shrinkable polyolefin-base film which can be produced from inexpensive raw materials.

According to the first aspect, the present invention provides a heat-shrinkable polyolefin-base film comprising 99 to 75 parts by weight of (A) a polypropylene-base resin and (B) a petroleum resin in total, and 1 to 25 parts by weight of (C) a cyclic polyolefin having a glass transition temperature not lower than 90°C and lower than 140°C.

According to the second aspect, the present invention provides a heat-shrinkable film comprising a base layer which comprises the heat-shrinkable polyolefin-base film of the present invention, and at least one outer layer which comprises a styrene resin and a polyolefin resin and is formed on at least one surface of the base layer.

In this heat-shrinkable film, the outer layer preferably comprises 50 to 100 parts by weight of a styrene resin and 50 to 0 parts by weight of a propylene-$\alpha$-olefin random copolymer.

According to the third aspect, the present invention provides a heat-shrinkable polyolefin-base film having a percentage of thermal shrinkage of at least 50% at 95°C x 10 seconds in the primary stretching direction of the film and a percentage of spontaneous shrinkage of less than 0.5% in a direction perpendicular to the primary shrinking direction after 1 week at 40°C.

In general a primary stretching direction means a direction in which a film shrinks to the largest extent. A percentage of thermal shrinkage a film can be measured as follows:

A square sample of a film (10 cm x 10 cm) is dipped in water maintained at 95°C±0.5°C for 10 seconds, and a size of the sample in each direction is measured. Then, a percentage of thermal shrinkage in a direction along each side of the square sample is calculated according to the following formula:

$$\text{Percentage of thermal shrinkage (\%)} = [(L_0 - L_s)/L_0] \times 100$$

wherein $L_0$ is a length of one side of a square sample before shrinking (10 cm) and L, is a length of the side of the square sample after shrinking.

Herein, the term "percentage of spontaneous shrinkage" means a value measured as follows:

Two samples each having a width of 30 mm and a length of 300 mm are cut out from a film in a direction perpendicular to the primary stretching direction of the film. With each sample, a distance "a" between a pair of gauge marks is accurately measured. Then, the samples are quickly placed in a thermostat room maintained at 40°C and then maintained at that temperature for one week. Thereafter, the samples are removed from the room and a distance "b" between the gauge marks is measured. Using the distances "a" and "b", a percentage of spontaneous shrinkage is calculated according to the following formula:

$$\text{Spontaneous shrinkage (\%)} = 100 \times (a - b)/a$$

According to the fourth aspect, the present invention provides a multilayer heat-shrinkable polyolefin-base film comprising (I) a base layer which comprises a polypropylene-base resin, a petroleum resin and a cyclic polyolefin, resin, and (II) at least one outer layer which comprises a styrene resin and a polyolefin resin and is formed on at least one surface of the base layer, wherein the film has a percentage of thermal shrinkage of at least 50% at 95°C x 10 seconds in the primary stretching direction of the film, a yield stress of at least 26 MPa in a direction perpendicular to the primary shrinking direction, and an adhesion strength of at least 3.0 N/15 mm when the outer layer (II) is adhered to the base layer (I) with tetrahydrofuran.

In one preferred embodiment of the present invention, the polypropylene-base polymer (A) is a propylene-$\alpha$-olefin random copolymer, which is preferably crystalline.

Preferable example of the $\alpha$-olefin include ethylene and $\alpha$-olefin having 4 to 20 carbon atoms.

In another preferred embodiment of the present invention, the petroleum resin (B) has a softening point of 120 to 150°C.

In a preferred embodiment of the multilayer film according to the present invention, a ratio of the total thickness of the outer layer or layers to the thickness of the whole film is from 0.1 to 0.4.

In a further preferred embodiment of the present invention, the film has a specific gravity of 0.95 or less.

The heat-shrinkable polyolefin-base film of the present invention comprises 99 to 75 parts by weight, preferably 99 to 90 parts by weight of (A) a polypropylene-base resin and (B) a petroleum resin in total, and 1 to 25 parts by weight, preferably 1 to 10 parts by weight of (C) a cyclic polyolefin having a glass transition temperature (Tg) not lower than 90°C and lower than 140°C (90°C $\leq$ Tg < 140°C).

A conventional film comprising a resin composition containing a polyolefin-base resin and a petroleum resin but no cyclic polyolefin resin may have a good percentage of thermal shrinkage at low temperature. However, such a resin composition has low stiffness and thus the percentage of spontaneous shrinkage of a film made from such a resin composition is larger than that of a film made of a conventional polypropylene and thus the film may cause troubles such as winding constriction over time. As disclosed in JP-A-2000-159946, an amorphous cyclic polyolefin resin having a glass transition temperature in a practical processing temperature range (50 to 90°C) such as a cyclic polyolefin is added to polypropylene to obtain a film having a suitable stiffness while maintaining shrinking properties. However, with the above technique, the cyclic polyolefin a unit price of which is high (about 1000 JPYEN/kg) should be added in an amount of about 15% or more, which may be a disadvantage in the production of a film.

According to the present invention, 1 to 25 parts by weight of the cyclic polyolefin (C) having a glass transition temperature not lower than 90°C and lower than 140°C. is compounded with 99 to 75 parts by weight of the polypropylene-base resin (A) and the petroleum resin (B). Thereby, the film has the stiffness and also the production cost of the film can be suppressed.

In one embodiment of the present invention, the heat-shrinkable film is a multilayer film comprising a base layer which comprises the heat-shrinkable polyolefin-base film of the present invention, and at least one outer layer which comprises a styrene resin and a polyolefin resin.

When the outer layer is formed from the styrene resin and the olefin resin, it can be adhered to the base layer with tetrahydrofuran, since the styrene resin has good solvent adhesion properties with tetrahydrofuran which is the most commonly used solvent. The addition of the olefin resin increases the bonding force between the base layer and the outer layer(s) so that the layers are less peeled from each other when the layers are adhered using a solvent. Accordingly, a high adhesion force is attained between the layers.

The multilayer film of the present invention has a yield stress of at least 26 MPa in a direction perpendicular to the primary shrinking direction. The reason why this range of the yield stress is selected is as follows:

The produced film is slit at a suitable width and then wound in the form of a roll. After a certain period of time, the rolled film is delivered to a user. If the film shrinks in the direction perpendicular to the primary stretching direction in a period between the production of the film and the delivery to the user, winding constriction occurs in the radial direction of the roll and causes troubles such as blocking when the user unwinds the film from the roll. When the yield stress of the film is less than 26 MPa in the direction perpendicular to the primary shrinking direction, the percentage of spontaneous shrinkage in the direction perpendicular to the primary shrinking direction is usually 0.5% or more, and thus the winding constriction tends to occur after slitting and winding.

The heat-shrinkable film of present invention preferably has a percentage of thermal shrinkage of at least 50% at 95°C x 10 seconds in the primary stretching direction. A label made of the heat-shrinkable film having a percentage of thermal shrinkage in the above range can adequately cover the surface of a glass or plastic bottle. When a label is made from a film having a percentage of thermal shrinkage of less than 50% at 95°C x 10 seconds, it tends to have a small percentage of thermal shrinkage and thus it may cause some troubles such as peeling off from the surface of the glass or plastic bottle after covering.

Furthermore, the heat-shrinkable film of the present invention preferably has a percentage of spontaneous shrinkage of less than 0.5% in a direction perpendicular to the primary shrinking direction after being kept at 40°C for one week. The reason why this range of the percentage of spontaneous shrinkage is selected is as follows:

As described above, the produced film is slit at a suitable width and then wound in the form of a roll. After a certain period of time, the rolled film is delivered to a user. If the film shrinks in the direction perpendicular to the primary stretching direction in a period between Lhe production of the film and the delivery to the user, the winding constriction occurs in the radial direction of the roll and causes troubles such as blocking when the user unwinds the film from the roll. When the percentage of spontaneous shrinkage in the direction perpendicular to the primary shrinking direction is 0.5% or more, the winding constriction tends to occur after slitting and winding.

Hereinafter, the preferred examples of the resin composition used according to the present invention are explained.

[I] Resin composition

(i) Base layer

(a) In the present invention, the polypropylene-base resin is preferably a propylene-$\alpha$-olefin copolymer (e.g. a crystalline propylene-$\alpha$-olefin copolymer) which is a random copolymer of propylene and at least one $\alpha$-olefin. Examples of the $\alpha$-olefin include ethylene and $\alpha$-olefin having 4 to 20 carbon atoms. Among them, ethylene, butene-1, hexene-1 and octene-1 are preferably used. In particular, a copolymer or a terpolymer comprising propylene and ethylene and/or butylene is preferred. However, any other propylene-$\alpha$-olefin copolymer may be used insofar as the objects of the present invention are achieved, that is, the film has the desired thermal properties and stiffness. The propylene-$\alpha$-olefin copolymer usually has a specific gravity of 0.96 or less, preferably 0.94 or less, more preferably 0.92 or less.

(b) In the present invention, the petroleum resin is typically a resin prepared by partially or completely hydrogenating an aromatic petroleum resin. Examples of commercially available petroleum resins are ALCON (available from ARAKAWA CHEMICAL INDUSTRIES, LTD.), ESCOLETS (available from TONEX Co., Ltd.), etc. The petroleum resin preferably has a softening point of at least 110°C, more preferably at least 125°C. When the softening point of the petroleum resin is less than 110°C, the film may become tacky or may be whitened over time. The petroleum resin usually has a specific gravity of 0.97 to 1.04.

(c) The cyclic polyolefin resin is a generic name and specifically includes (1) a ring-opening (co)polymer of at least one cycloolefin, which may optionally be hydrogenated, (2) an addition (co)polymer of at least one cycloolefin, and (3) a random copolymer of a cycloolefin with an $\alpha$-olefin such as ethylene, propylene, etc. Furthermore, (4) a graft polymer comprising one of the polymers (1), (2) and (3) to which an unsaturated carboxylic aci.d or its derivative is grafted may be used.

The cycloolefin is not limited to the above olefins, and other cycloolefin such as norbornene, tetracyclodecene, etc. may be used.

The cyclic polyolefin should have a glass transition temperature not lower than 90°C and lower than 140°C, preferably not lower than 90°C and lower than 110°C. Although a cyclic polyolefin having a glass transition temperature of lower than 90°C may be used, in this case, the amount of the cyclic polyolefin should be more than about 15%, which may increase the cost of the raw materials of the film. When the cyclic polyolefin has a glass transition temperature of 140°C or higher, the stretching property of the resin composition may be deteriorated when it is processed to form a film so that the film thickness may be uneven, or the appearance of the film may be worsened.

The cyclic polyolefin usually has a specific gravity of 1.02 to 1.04.

(ii) Outer layer

(a) The styrene resin is generally a copolymer of a styrenic monomer and a conjugated diene monomer in the present invention.

Examples of the styrenic monomer include styrene, $\alpha$-methylstyrene, p-methylsytrene, etc. Examples of the conjugated diene monomer include butadiene, isoprene, 1,3-butadiene, etc. The conjugated diene monomers may be used singly or as a mixture of two or more of them.

Preferably, the styrene resin is a block copolymer of the styrenic monomer and the conjugated diene monomer. In particular, a block copolymer of styrene and butadiene, that is a styrene-butadiene block copolymer, is preferably used. The content of styrene in the block copolymer is usually from 10 to 95% by weight, preferably from 15 to 90% by weight. When the content of styrene exceeds 95% by weight, the impact resistance of the film may unpreferably decrease. When the content of styrene is less than 10% by weight, the adhesion strength of the film with a solvent may decrease so that the function of the outer layer may be deteriorated when the outer layer is adhered to the base layer with a solvent. Furthermore, the diene monomer makes the block copolymer soft. Thus, when the content of the diene monomer increases, the film may not have sufficient stiffness so that the spontaneous shrinkage in a direction perpendicular to the primary shrinking direction increases. As a result, the winding constriction may occur in the radial direction of the rolled film and thus the troubles such as blocking of the film may be caused.

(b) The polyolefin resin is preferably a propylene-$\alpha$-olefin copolymer. More preferably, the propylene-$\alpha$-olefin copolymer is crystalline. It is used to increase the bonding force between the base layer and the outer layer. The propylene-$\alpha$-olefin copolymer may be selected from the propylene-$\alpha$-olefin copolymers which are exemplified in connection with the base layer.

-Compositions of Raw Materials

The amount of the petroleum resin contained in the film of the present invention is usually from 5 to 40% by weight, preferably from 5 to 25% by weight, based on the total weight of the resin mixture constituting the base layer, and the total amount of the petroleum resin and the polypropylene-base resin is from 99 to 75% by weight.

When the amount of the petroleum resin is less than 5% by weight, the film may not have sufficiently low shrinking properties. When the amount of the petroleum resin exceeds 40% by weight, the laminate film often has a specific gravity of 0.950 or more. When the laminate film having such a specific gravity is used as a covering film of a bottle made of a saturated polyester resin, it may sometimes be difficult to accurately separate the film from the polyester resin by a liquid-specific gravity method in recycling the polyester resin.

The amount of the cyclic polyolefin is from 1 to 25% by weight, preferably from 3 to 20% by weight, more preferably from 3 to 12% by weight based on the weight of the resin in the film of the present invention, in view of the costs of the raw materials.

When the amount of the cyclic polyolefin is less than 1% by weight, the stiffness of the film may be insufficient so that the spontaneous shrinkage of the film in a direction perpendicular to the primary shrinking direction may increase. As a result, the winding constriction can occur in the radial direction of the rolled film and thus the troubles such as blocking of the film may be caused. When the amount of the cyclic polyolefin exceeds 25% by weight, the resin composition may have insufficient stretching properties, or the produced film may have inferior appearance.

The specific gravities of the petroleum resin and the cyclic olefin are preferably 0.97 to 1.04, and 1.00 to 1.05, respectively. Therefore, when the total amount of the petroleum resin and the cyclic olefin exceeds 50% by weight, the specific gravity of the laminate film often exceeds 0.950. When the laminate film having such a specific gravity, which has been printed, is used as a covering film of a bottle made of a saturated polyester resin, it may sometimes be difficult to accurately separate the film from the polyester resin by a liquid-specific gravity method in recycling the polyester resin.

The amount of the styrene resin in the outer layer is preferably from 40 to 100% by weight, more preferably from 40 to 70% by weight. When the amount of the styrene resin is less than 40% by weight, the outer layer may not be sufficiently adhered to the base layer with a solvent so that the functions of the outer layer may be deteriorated.

-Thickness of Base Layer and Outer Layer

In the present invention, a ratio of the total thickness of the outer layer or layers to the thickness of the whole film is preferably from 0.1 to 0.4, more preferably from 0.15 to 0.35. When this ratio is less than 0.1, the outer layer may not be sufficiently adhered to the base layer with a solvent so that the functions of the outer layer may be deteriorated. When this ratio exceeds 0.4, the specific gravity of the laminate film tends to become 0.950 or more.

-Other Components

The film of the present invention may optionally contain various additives such as antioxidants, antistatic agents, neutralizing agents, nucleating agents, antiblocking agents, slip agents, etc. as long as the effects of the present invention are not impaired.

To further improve the shrinking properties of the film, the film of the present invention may contain a conventional component for improving shrinking properties, for example, a propylene-butene-1 copolymer, polybutene-1, linear low-density polyethylene, etc.

The production method of the film according to the present invention will be explained.

[II] Production of Film for Shrinkable Label

The heat-shrinkable polyolefin-base film for shrinkable label according to the present invention can be produced by any conventional molding method such as an inflation method, a flat-form stretching method, etc. Preferably, the flat-form stretching method, in particular, a uniaxial stretching method using a tenter is employed.

After the resin composition is melt extruded by the above method, the film is stretched at least in one direction at a draw ratio of preferably at least 2 to obtain a film for shrinkable label according to the present invention. The stretching direction may be at least in one direction, preferably only in one direction perpendicular to the conveying direction of the film or the label. When the draw ratio is less than 2, the film may not have a sufficient factor of shrinkage.

To increase the factor of shrinkage of the film, the stretching is preferably carried out at as low temperature as possible. Particularly when the process includes a step for preheating an unstretched film, the preheating temperature is as low as possible in a range where the resin composition can be shaped in view of the increase of the factor of shrinkage.

The thickness of the film for shrinkable label is not particularly limited, but is usually 100 $\mu$m or less, preferably from 30 to 80 $\mu$m.

Furthermore, the film for shrinkable label of the present invention is preferably a film for a multilayer label. A multilayer film can be produced by a multilayer co-extrusion method, a dry lamination method, etc.

[III] Applications of Heat-Shrinkable Film

The heat-shrinkable polyolefin-base film of the present invention has good thermal shrinking properties and thus can commercially be used as a displaying label for PET bottles, a displaying label for glass bottles, etc. Furthermore, the heat-shrinkable polyolefin-base film of the present invention has the improved low-temperature shrinking properties and good high-speed wrapping properties, and thus it is suitably used as a label for wrapping particularly a PET bottle or a glass bottle which has been filled with a content such as a cold drink, at low temperature. In addition, by making effective use of heat resistance of the polypropylene-base resin, the heat-shrinkable polyolefin-base film of the present invention is preferably used as a displaying label for a PET bottle which has been filled with a content such as a hot drink at a high temperature.

EXAMPLES

The present invention will be illustrated by the following examples, which do not limit the scope of the present invention in any way. In the examples, "parts" are "parts by weight" unless otherwise indicated.

Herein, the properties of heat shrinkable films are measured as follows:

-Percentage of Spontaneous Shrinkage

To evaluate the elasticity of a heat-shrinkable film, a percentage of spontaneous shrinkage of the film is measured.

Two samples each having a width of 30 mm and a length of 300 mm are cut out from a film in a direction perpendicular to the primary stretching direction. With each sample, a distance "a" between two gauge marks is accurately measured. Then, the samples are quickly placed in a thermostat room kept at 40°C and then maintained at that temperature for one week. Thereafter, the samples are removed from the room and a distance "b" between the gauge marks is measured. Using the distances "a" and "b", a percentage of spontaneous shrinkage is calculated according to the following formula:

$$\texttt{Spontaneous shrinkage (\%) = 100 x (a - b)/a}$$

-Practical Evaluation of Spontaneous Constriction

A: A sample film is slit and wound in a roll form. The rolled film is maintained at 40°c for 12 hours. After that neither blocking nor shrinking wrinkle was observed when the film is unwound.
B: After the same processing as above, the film suffers from blocking and breakage when it is unwound. Furthermore, the film has shrinking wrinkles over the whole length of the film.

-Haze

A haze value is measured using a haze meter (NDH-1001 DP manufactured by Nippon Denshoku Kogyo Kabushikikaisha) according to JIS JK 7106.

-Percentage of Thermal Shrinkage

A square sample of 10 cm x 10 cm is cut out from a stretched film with one side of the square being in parallel with the conveying direction of the film, and dipped in a water tank heated at a predetermined temperature for 10 seconds. Thereafter, the sample is immediately dipped in a separate water tank at 23°C for 20 seconds. Then, the lengths in the primary shrinking direction and in a direction perpendicular to the primary shrinking direction are measured and percentages of thermal shrinkage are calculated.

-Adhesion Strength with Solvent

A pair of pieces of a stretched film are sealed with tetrahydrofuran. The sealed part is cut in the primary stretching direction of the film with a width of 15 mm to obtain a sample. Then, the sample is set on a universal tensile tester (STM-50 manufactured by Baldwin) and the adhesion strength is measured by a 180 degree peeling test at a pulling rate of 200 mm/min.

-Practical Evaluation of Adhesion Strength with Solvent

A: When the sealed part is peeled with fingers, large resistance is present, and some force is necessary to peel the sealed part.
B: When the sealed part is peeled with fingers, only slight resistance is present, and the sealed part can be peeled without difficulty.

-Yield Stress

Using TENSILON/UTM-III L (TOYO MEASURING INSTRUMENTS CO., LTD.), a sample of a film having a width of 15 mm is subjected to a tensile test at a pulling rate of 200 mm/min., at an ambient temperature of 23°C with a chuck distance of 100 mm, in a direction perpendicular to the primary stretching direction, and a tensile stress-strain curve is recorded. A yield stress (unit: MPa) is a stress value corresponding to the first maximum point in the tensile stress-strain curve.

-Specific Gravity of Film

A density of the film is measured by a density-gradient tube method. Then, a specific gravity of a film is calculated as a ratio of the density of the film to a density of water at 23°C.

Example 1

Preparation of a resin composition and formation of a film

A propylene-butene random copolymer (SP 3811 manufactured by Sumitomo Chemical Co., Ltd.) (33 parts), a propylene-ethylene random copolymer (S 131 manufactured by Sumitomo Chemical Co., Ltd.) (38 parts), a petroleum resin (ALCON P140 manufactured by ARAKAWA CHEMICAL INDUSTRIES, LTD.) (24 parts), and a cyclic polyolefin (APEL 6011 T manufactured by MITSUI CHEMICALS, INC.; glass transition temperature (Tg) = 105°C) (5 parts) were mixed, and the mixture was charged in an extruder and extruded from a T-die at 230°C. Then, the extruded film was cooled to solidify with a cooling roll maintained at 20°C. After preheating the film at 90°C for 26 seconds, the film was stretched with a tenter at 75°C at a draw ratio of 6 in a transverse direction. Then, the film was gradually cooled in the tenter at 70°C over 45 seconds while relaxing it by 8% in the width (transverse) direction to obtain a flat-form heat-shrinkable film having a thickness of 40 $\mu$m.
This stretched film was subjected to the above measurements and evaluations. The results are shown in Table 1.

Example 2

A flat-form heat-shrinkable film having a thickness of 40 $\mu$m was produced in the same manner as in Example 1 except that a propylene-butene random copolymer (SP 3811 manufactured by Sumitomo Chemical Co., Ltd.) (33 parts), a propylene-ethylene random copolymer (S 131 manufactured by Sumitomo Chemical Co., Ltd.) (37 parts), a petroleum resin (ALCON P140 manufactured by ARAKAWA CHEMICAL INDUSTRIES, LTD.) (23 parts), and a cyclic polyolefin (APEL 6011 T manufactured by MITSUI CHEMICALS, INC.; glass transition temperature (Tg) = 105°C) (7 parts) were used.
This stretched film was subjected to the above measurements and evaluations. The results are shown in Table 1.

Example 3

Preparation of a resin composition and formation of a laminate film

As a resin composition for a base layer, a mixture of a propylene-butene random copolymer (SP 3811 manufactured by Sumitomo Chemical Co., Ltd.) (33 parts), a propylene-ethylene random copolymer (S 131 manufactured by Sumitomo Chemical Co., Ltd.) (38 parts), a petroleum resin (ALCON P140 manufactured by ARAKAWA CHEMICAL INDUSTRIES, LTD.) (24 parts), and a cyclic polyolefin (APEL 6011 T manufactured by MITSUI CHEMICALS, INC.; glass transition temperature (Tg) = 105°C) (5 parts) was used.
As a resin composition for outer layers, a mixture of a propylene-ethylene-butene random copolymer (FL 6741G) (38.6 parts), a hydrogenated butadiene-styrene rubber (50 parts), an antistatic agent (a mixture of 6% by weight of glycerin and 94% by weight of polypropylene (homopolymer)) (6 parts), an atiblocking agent (a mixture of 10% by weight of crosslinked polymethyl methacrylate particles having an average particle size of 7.0 $\mu$m and 90% by weight of polypropylene (homopolymer)) (2 parts), a slip aid I (a mixture of 5% by weight of erucamide and 95% by weight of polypropylene (homopolymer)) (0.4 part) and a slip aid II (a mixture of 2% by weight of behenamide and 98% by weight of polypropylene (homopolymer)) (3 parts) was used.
The above mixtures were separately charged in an extruder and co-extruded from a T-die at 230°C. Then, the extruded film was cooled to solidify with a cooling roll maintained at 20°C. After preheating the film at 90°C for 26 seconds, the film was stretched with a tenter at 75°C at a draw ratio of 6 in a transverse direction. Then, the film was gradually cooled in the tenter at 70°C over 45 seconds while relaxing it by 8% in the width (transverse) direction to obtain a flat-from heat-shrinkable film. Each outer layer had a thickness of 6 $\mu$m, and the base layer had a thickness of 38 $\mu$m. Thus, the total thickness of the whole film was 50 $\mu$m.
This stretched film was subjected to the above measurements and evaluations. The results are shown in Table 1.

Example 4

A heat-shrinkable film was produced in the same manner as in Example 3 except that, as a resin composition for a base layer, a mixture of a propylene-butene random copolymer (SP 3811 manufactured by Sumitomo Chemical Co., Ltd.) (33 parts), a propylene-ethylene random copolymer (S 131 manufactured by Sumitomo Chemical Co., Ltd.) (37 parts), a petroleum resin (ALCON P140 manufactured by ARAKAWA CHEMICAL INDUSTRIES, LTD.) (23 parts), and a cyclic polyolefin (APEL 6011 T manufactured by MITSUI CHEMICALS, INC.; glass transition temperature (Tg) = 105°C) (7 parts) was used.
The percentage of thermal shrinkage of the film in the primary stretching direction was 50% or more at 95°C x 10 seconds.

Each outer layer had a thickness of 6 $\mu$m, and the base layer had a thickness of 38 $\mu$m. Thus, the total thickness of the whole film was 50 $\mu$m.

This stretched film was subjected to the above measurements and evaluations. The results are shown in Table 1.

Comparative Example 1

A heat-shrinkable film was produced in the same manner as in Example 3 except that, as a resin composition for a base layer, a mixture of a propylene-butene random copolymer (SP 3811 manufactured by Sumitomo Chemical Co., Ltd.) (33 parts), a propylene-ethylene random copolymer (S 131 manufactured by Sumitomo Chemical Co., Ltd.) (38 parts), a petroleum resin (ALCON P140 manufactured by ARAFCAWA CHEMICAL INDUSTRIES, LTD.) (24 parts), and a cyclic polyolefin (TOPAS 6013 F04 manufactured by Ticona; glass transition temperature (Tg) = 140°C) (5 parts) was used.

The stretchability of this film was low, and the thickness of the film was uneven.

This stretched film was subjected to the above measurements and evaluations. The results are shown in Table 1.

Comparative Example 2

A heat-shrinkable film was produced in the same manner as in Example 3 except that, as a resin composition for a base layer, a mixture of a propylene-butene random copolymer (SP 3811 manufactured by Sumitomo Chemical Co., Ltd.) (33 parts), a propylene-ethylene random copolymer (S 131 manufactured by Sumitomo Chemical Co., Ltd.) (38 parts), a petroleum resin (ALCON P140 manufactured by ARAKAWA CHEMICAL INDUSTRIES, LTD.) (24 parts), and a cyclic polyolefin (APEL 8011T manufactured by MITSUI CHEMICALS, INC.; glass transition temperature (Tg) = 70°C) (5 parts) was used.

Each outer layer had a thickness of 6 $\mu$m, and the base layer had a thickness of 38 $\mu$m. Thus, the total thickness of the whole film was 50 $\mu$m.

This stretched film was subjected to the above measurements and evaluations. The results are shown in Table 1.

Comparative Example 3

A heat-shrinkable film was produced in the same manner as in Example 3 except that, as a resin composition for a base layer, a mixture of a propylene-butene random copolymer (SP 3811 manufactured by Sumitomo Chemical Co., Ltd.) (30 parts), a propylene-ethylene random copolymer (S 131 manufactured by Sumitomo Chemical Co., Ltd.) (34 parts), a petroleum resin (ALCON P140 manufactured by ARAKAWA CHEMICAL INDUSTRIES, LTD.) (21 parts), and a cyclic polyolefin (APEL 8011T manufactured by MITSUI CHEMICALS, INC.; glass transition temperature (Tg) = 70°C) (15 parts) was used.

The raw material cost of this film was about 13% larger than that of the film produced in Example 3.

Each outer layer had a thickness of 6 $\mu$m, and the base layer had a thickness of 38 $\mu$m. Thus, the total thickness of the whole film was 50 $\mu$m.

This stretched film was subjected to the above measurements and evaluations. The results are shown in Table 1.

Example 5

As a resin composition for a base layer, a mixture of a propylene-butene random copolymer (SPX 78H3 manufactured by Sumitomo Chemical Co., Ltd.) (26 parts), a propylene-ethylene random copolymer (S 131 manufactured by Sumitomo Chemical Co., Ltd.) (30 parts), a petroleum resin (ALCON P140 manufactured by ARAKAWA CHEMICAL INDUSTRIES, LTD.) (19 parts), and a cyclic polyolefin (APEL 8008 T manufactured by MITSUI CHEMICALS, INC.) (25 parts) was used.

As a resin composition for outer layers, a mixture of a propylene-ethylene-butene random copolymer (FL 6741G) (38.6 parts), a hydrogenated butadiene-styrene rubber (50 parts), an antistatic agent (a mixture of 6% by weight of glycerin and 94% by weight of polypropylene (homopolymer)) (6 parts), an atiblocking agent (a mixture of 10% by weight of crosslinked polymethyl methacrylate particles having an average particle size of 7.0 $\mu$m and 90% by weight of polypropylene (homopolymer)) (2 parts), a slip aid I (a mixture of 5% by weight of erucamide and 95% by weight of polypropylene (homopolymer)) (0.4 part) and a slip aid II (a mixture of 2% by weight of behenamide and 98% by weight of polypropylene (homopolymer)) (3 parts) was used.

The above mixtures were separately charged in an extruder and co-extruded from a T die at 230°C. Then, the extruded film was cooled to solidify with a cooling roll maintained at 20°C. After preheating the film at 105°C for 24 seconds, the film was stretched with a tenter at 75°C at a draw ratio of 6 in a transverse direction. Then, the film was gradually cooled in the tenter at 70°C over 43 seconds while relaxing it by 8% in the width (transverse) direction to obtain a flat-form heat-shrinkable film. Each outer layer had a thickness of 6 μm, and the base layer had a thickness of 38 μm. Thus, the total thickness of the whole film was 50 μm.

The percentage of thermal shrinkage of the film in the primary stretching direction was 50% or more at 95°C x 10 seconds. The yield stress of this film was 26 MPa or more in the direction perpendicular to the primary stretching direction. The percentage of spontaneous shrinkage in the direction (machine direction), which was perpendicular to the primary stretching direction, was 0.5% or less. The adhesion strength with tetrahydrofuran as a solvent was 3.0 N/ 15 mm or more. The yield stress, the percentage of spontaneous shrinkage, the appearance (haze), the adhesion strength with solvent, the percentages of thermal shrinkage at 80°C and 95°C and the specific gravity of this film are shown in Table 1.

Example 6

A heat-shrinkable film was produced in the same manner as in Example 5 except that, as a resin composition for a base layer, a mixture of a propylene-butene random copolymer (30 parts), a propylene-ethylene random copolymer (34 parts), a petroleum resin (ALCON P140 manufactured by ARAKAWA CHEMICAL INDUSTRIES, LTD.) (21 parts), and a cyclic polyolefin (APEL 8008 T manufactured by MITSUI CHEMICALS, INC.) (15 parts) was used.

The percentage of thermal shrinkage of this film in the primary stretching direction was 50% or more at 95°C x 10 seconds. The yield stress of this film was 26 MPa or more in the direction perpendicular to the primary stretching direction. The percentage of spontaneous shrinkage in the direction (machine direction), which was perpendicular to the primary stretching direction, was 0.5% or less. The adhesion strength with tetrahydrofuran as a solvent was 3.0 N/ 15 mm or more. The yield stress, the percentage of spontaneous shrinkage, the appearance (haze), the adhesion strength with solvent, the percentages of thermal shrinkage at 80°C and 95°C and the specific gravity of this film are shown in Table 1.

Comparative Example 4

A film for a shrinkable label was produced in the same manner as in Example 5 except that, as a resin composition for a base layer, a mixture of a propylene-butene random copolymer (35 parts), a propylene-ethylene random copolymer (40 parts), and a petroleum resin (ALCON P140 manufactured by ARAKAWA CHEMICAL INDUSTRIES, LTD.) (25 parts) was used.

The percentage of thermal shrinkage of this film in the primary stretching direction was 50% or more at 95°C x 10 seconds. The yield stress of this film was less than 26 MPa in the direction perpendicular to the primary stretching direction, and the percentage of spontaneous shrinkage in the direction (machine direction), which was perpendicular to the primary stretching direction, exceeded 0.5%.

The results of the evaluations of this film are shown in Table 1.

Comparative Example 5

A film for a shrinkable label was produced in the same manner as in Example 5 except that, as a resin composition for a base layer, a mixture of a propylene-butene random copolymer (35 parts), a propylene-ethylene random copolymer (40 parts), and a cyclic olefin (APEL 8008 T manufactured by MITSUI CHEMICALS, INC.) (25 parts) was used.

The yield stress of this film was 26 MPa or more in the direction perpendicular to the primary stretching direction, and the percentage of spontaneous shrinkage in the direction (machine direction), which was perpendicular to the primary stretching direction, was 0.5% or less. However, the percentage of thermal shrinkage of this film in the primary stretching direction was 50% or less at 95°C x 10 seconds.

The results of the evaluations of this film are shown in Table 1.

Reference Example

A film for a shrinkable label was produced in the same manner as in Example 5 except that, as a resin composition for a base layer, a mixture of a propylene-butene random copolymer (35 parts), a propylene-ethylene random copolymer (40 parts), and a petroleum resin (ALCON P140 manufactured by ARAKAWA CHEMICAL INDUSTRIES, LTD.) (25 parts) was used, and as a resin composition for outer layers, a mixture of a cyclic polyolefin (APEL 8008 T manufactured by MITSUI CHEMICALS, INC.) (95 parts), an antistatic agent (a mixture of 20% by weight of AS component (glycerin) and 80% by weight of polyethylene) (2 parts), and an atiblocking agent (a mixture of 10% by weight of polymethyl methacrylate particles having an average particle size of 10 μm and 90% by weight of polyethylene) (3 parts) was used.

The percentage of thermal shrinkage of this film in the primary stretching direction was 50% or more at 95°C x 10 seconds. The yield stress of this film was 26 MPa or more in the direction perpendicular to the primary stretching direction. However, the adhesion strength with tetrahydrofuran as a solvent was 3.0 N/15 mm or more

The results of the evaluations of this film are shown in Table 1.

Table 1

| Example No. | 1 | 2 | 3 | 4 | 5 | 6 |
|---|---|---|---|---|---|---|
| Percentage of spontaneous shrinkage (MD) (%) | 0.25 | 0.20 | 0.30 | 0.25 | -0.22 | 0.20 |
| Practical evaluation | A | A | A | A | A | A |
| Haze (%) | 4.50 | 6.70 | 5.70 | 8.00 | 7.50 | 6.50 |
| Adhesion strength with THF (N/15 mm) | --- | --- | 3.90 | 3.50 | 3.55 | 3.24 |
| Practical evaluation | - | - | A | A | A | A |
| Yield stress (MPa) | 29.50 | 30.00 | 30.06 | 30.17 | 31.72 | 29.75 |
| Stretchability | GOOD | GOOD | GOOD | GOOD | GOOD | GOOD |
| Percentage of thermal shrinkage at 80°C -MD | 0.0 | 0.0 | 0.0 | 0.0 | 1.0 | 2.5 |
| -TD | 22.5 | 21.5 | 21.5 | 20.0 | 35.5 | 31.0 |
| at 95°C -MD | 1.0 | 1.0 | 1.0 | 0.0 | 0.0 | 2.0 |
| -TD | 54.5 | 52.5 | 53.5 | 51.0 | 59.0 | 57.0 |
| Specific gravity | 0.9300 | 0.9320 | 0.9117 | 0.9125 | 0.930 | 0.922 |

Table 1 (continued)

| Example No. | C. 1 | C. 2 | C. 3 | C. 4 | C. 5 | Ref. |
|---|---|---|---|---|---|---|
| Percentage of spontaneous shrinkage (MD) (%) | 0.15 | 0.65 | 0.20 | 0.97 | 0.47 | 0.00 |
| Practical evaluation | A | B | A | B | A | A |
| Haze (%) | 7.40 | 4.93 | 6.50 | 4.70 | 7.70 | 5.20 |
| Adhesion strength with THF (N/15 mm) | 2.50 | 5.70 | 3.24 | 4.90 | 4.43 | 2.39 |
| Practical evaluation | B | A | A | A | A | B |
| Yield stress (MPa) | 30.00 | 25.40 | 29.75 | 22.77 | 26.40 | 33.66 |
| Stretchability | POOR | GOOD | GOOD | --- | --- | --- |
| Percentage of thermal shrinkage at 80°C -MD | 0.0 | 3.5 | 2.5 | 3.8 | 2.3 | -0.5 |
| -TD | 20.5 | 27.0 | 31.0 | 26.0 | 26.3 | 42.5 |
| at 95°C -MD | 1.0 | 2.5 | 2.0 | 4.1 | 3.0 | -2.0 |
| -TD | 52.3 | 55.0 | 55.0 | 57.0 | 48.0 | 67.5 |
| Specific gravity | 0.9120 | 0.9110 | 0.9222 | 0.909 | 0.910 | 0.946 |

Note: MD: measured in the direction perpendicular to the primary stretching direction.
TD: measured in the primary stretching direction.

## Claims

1. A heat-shrinkable polyolefin-base film comprising 99 to 75 parts by weight of (A) a polypropylene-base resin and (B) a petroleum resin in total, and J to 25 parts by weight of (C) a cyclic polyolefin having a glass transition temperature not lower than 90°C and lower than 140°C.

2. The heat-shrinkable polyolefin-base film according to claim 1, wherein said polypropylene-base polymer (A) is a propylene-α-olefin random copolymer.

3. The heat-shrinkable polyolefin-base film according to claim 1, wherein said petroleum resin (B) has a softening point of 120 to 150°C.

4. The heat-shrinkable polyolefin-base film according to claim 1, which has a percentage of thermal shrinkage of at least 50% at 95°C x 10 seconds in the primary stretching direction of the film and a percentage of spontaneous shrinkage of less than 0.5% in a direction perpendicular to the primary shrinking direction after one week at 40°C.

5. The heat-shrinkable polyolefin-base film according to claim 1, which has a specific gravity of 0.95 or less.

6. A heat-shrinkable film comprising a base layer which comprises a heat-shrinkable polyolefin-base film according to any of claims 1 to 5, and at least one outer layer which comprises a styrene resin and a polyolefin resin and Is formed on at least one surface of the base layer.

7. The heat-shrinkable film according to claim 6, wherein said outer layer comprises 40 to 100 parts by weight of a styrene resin and 60 to 0 parts by weight of a propylene-α-olefin random copolymer.

8. The heat-shrinkable film according to claim 6, wherein a ratio of the total thickness of the outer layer to the thickness of the whole film is from 0.1 to 0.4.

9. The heat-shrinkable film according to claim 6, which has a specific gravity of 0.95 or less.

10. A multilayer heat-shrinkable polyolefin-base film comprising (I) a base layer which comprises a polypropylene-base resin, a petroleum resin and a cycl ic polyolefin resin, and (II) at least one outer layer which comprises a styrene resin and a polyolefin resin and is formed on at least one surface of the base layer, wherein the film has a percentage of thermal shrinkage of at least 50% at 95°C x 10 seconds in the primary stretching direction of the film, a yield stress of at least 26 MPa in a direction perpendicular to the primary shrinking direction, and an adhesion strength of at least 3.0 N/15 mm when the outer layer (II) is adhered to the base layer (I) with tetrahydrofuran.

11. The heat-shrinkable film according to claim 10, wherein a ratio of the total thickness of the outer layer to the thickness of the whole film is from 0.1 to 0.4.

12. The heat-shrinkable film according to claim 10, which has a specific gravity of 0.95 or less.

**Patentansprüche**

1. Durch Wärme schrumpfbare Folie auf Polyolefinbasis, umfassend insgesamt 99 bis 75 Gewichtsteile an (A) einem Harz auf Polypropylenbasis und (B) einem petrochemischen Harz, und 1 bis 25 Gewichtsteile an (C) einem cyclischen Polyolefin mit einer Glasübergangstemperatur von nicht weniger als 90°C und niedriger als 140°C.

2. Durch Wärme schrumpfbare Folie auf Polyolefinbasis gemäß Anspruch 1, wobei das Polymer auf Polypropylenbasis (A) ein statistisches Propylen-α-Olefincopolymer ist.

3. Durch Wärme schrumpfbare Folie auf Polyolefinbasis gemäß Anspruch 1, wobei das petrochemische Harz (B) einen Erweichungspunkt von 120 bis 150°C aufweist.

4. Durch Wärme schrumpfbare Folie auf Polyolefinbasis gemäß Anspruch 1, welche eine prozentuale thermische Schrumpfung von mindestens 50 % bei 95°C x 10 s in der primären Streckrichtung der Folie und eine prozentuale spontane Schrumpfung von weniger als 0,5 % in einer zur primären Schrumpfungsrichtung senkrechten Richtung nach einer Woche bei 40°C aufweist.

5. Durch Wärme schrumpfbare Folie auf Polyolefinbasis gemäß Anspruch 1, welche ein spezifisches Gewicht von 0,95 oder weniger aufweist.

6. Durch Wärme schrumpfbare Folie umfassend eine Basisschicht, welche eine durch Wärme schrumpfbare Folie auf Polyolefinbasis nach einem der Ansprüche 1 bis 5 umfasst, und mindestens eine äußere Schicht, welche ein Styrolharz und ein Polyolefinharz umfasst und auf mindestens einer Oberfläche der Basisschicht gebildet ist.

7. Durch Wärme schrumpfbare Folie gemäß Anspruch 6, wobei die äußere Schicht 40 bis 100 Gewichtsteile eines Styrolharzes und 60 bis 0 Gewichtsteile eines statistischen Propylen-α-Olefincopolymers umfasst.

8. Durch Wärme schrumpfbare Folie gemäß Anspruch 6, wobei ein Verhältnis der Gesamtdicke der äußeren Schicht zu der Dicke der gesamten Folie 0,1 bis 0,4 beträgt.

9. Durch Wärme schrumpfbare Folie gemäß Anspruch 6, welche ein spezifisches Gewicht von 0,95 oder weniger aufweist.

10. Mehrschichtige durch Wärme schrumpfbare Folie auf Polyolefinbasis, umfassend (I) eine Basisschicht, welche ein Harz auf Polypropylenbasis, ein petrochemisches Harz und ein cyclisches Polyolefinharz umfasst, und (II) mindestens eine äußere Schicht, welche ein Styrolharz und ein Polyolefinharz umfasst und auf mindestens einer Oberfläche der Basisschicht gebildet ist, wobei die Folie eine prozentuale thermische Schrumpfung von mindestens 50 % bei 95°C x 10 s in der primären Streckrichtung der Folie, eine Streckspannung von mindestens 26 MPa in einer zu der primären Schrumpfungsrichtung senkrechten Richtung und eine Adhäsionsfestigkeit von mindestens 3,0 N/15 mm, wenn die äußere Schicht (II) an die Basisschicht (I) mit Tetrahydrofuran geklebt wird, aufweist.

11. Durch Wärme schrumpfbare Folie gemäß Anspruch 10, wobei ein Verhältnis der Gesamtdicke der äußeren Schicht zu der Dicke der gesamten Folie 0,1 bis 0,4 beträgt.

12. Durch Wärme schrumpfbare Folie gemäß Anspruch 10, welche ein spezifisches Gewicht von 0,95 oder weniger aufweist.

## Revendications

1. Film thermo-rétractable à base de polyoléfine comprenant au total 99 à 75 parties en poids d'une résine à base de polypropylène (A) et d'une résine de pétrole (B), et 1 à 25 % en poids d'une polyoléfine cyclique (C) ayant une température de transition vitreuse qui n'est pas inférieure à 90°C et inférieure à 140°C.

2. Film thermo-rétractable à base de polyoléfine selon la revendication 1, ledit polymère à base de polypropylène (A) étant un copolymère statistique de propylène et d'α-oléfine.

3. Film thermo-rétractable à base de polyoléfine selon la revendication 1, ladite résine de pétrole (B) ayant un point de ramollissement de 120 à 150°C.

4. Film thermo-rétractable à base de polyoléfine selon la revendication 1, qui a un pourcentage de retrait thermique d'au moins 50 % à 95 °C x 10 secondes dans la direction principale d'étirage du film et un pourcentage de retrait spontané inférieur à 0,5 % dans une direction perpendiculaire à la direction principale d'étirage après une semaine à 40°C.

5. Film thermo-rétractable à base de polyoléfine selon la revendication 1, qui a une densité égale ou inférieure à 0,95.

6. Film thermo-rétractable comprenant une couche de base qui comprend un film thermo-rétractable à base de polyoléfine selon l'une quelconque des revendications 1 à 5, et au moins une couche extérieure qui comprend une résine de styrène et une résine de polyoléfine et qui est formée sur au moins une surface de la couche de base.

7. Film thermo-rétractable selon la revendication 6, ladite couche extérieure contenant 40 à 100 parties en poids de résine de styrène et de 60 à 0 parties en poids d'un copolymère statistique de propylène et d'α-oléfine.

8. Film thermo-rétractable selon la revendication 6, un rapport de l'épaisseur totale de la couche extérieure sur l'épaisseur totale du film variant de 0,1 à 0,4.

9. Film thermo-rétractable selon la revendication 6, qui a une densité de 0,95 ou inférieure.

10. Film thermo-rétractable à base de polyoléfine, multicouche comprenant (I) une couche de base qui comprend une résine à base de polypropylène, une résine de pétrole et une résine de polyoléfine cyclique, et (II) au moins une couche extérieure qui comprend une résine de styrène et une résine polyoléfine et qui est formée sur au moins une surface de la couche de base, le film ayant un pourcentage de retrait thermique d'au moins 50 % à 95 °C x 10 secondes dans la direction principale d'étirage du film, une limite élastique d'au moins de 26 Mpa dans une direction perpendiculaire à la direction principale d'étirage et une force d'adhérence d'au moins 3,0 N/15 mm quand la couche extérieure (II) est faite adhérer sur la couche de base (I) avec du tétrahydrofurane.

11. Film thermo-rétractable selon la revendication 10, un rapport de l'épaisseur totale de la couche extérieure sur l'épaisseur totale du film variant de 0,1 à 0,4.

12. Film thermo-rétractable selon la revendication 10, qui a une densité égale ou inférieure à 0,95.